# EUROPÄISCHE PATENTSCHRIFT

(11) **EP 1 218 674 B1**
(45) Veröffentlichungstag und Bekanntmachung des Hinweises auf die Patenterteilung: **22.12.2004**
(21) Anmeldenummer: 00967698.2
(22) Anmeldetag: 18.09.2000
(51) Int. Cl.: F25B 40/00, F25B 43/00, B60H 1/32, F28D 1/06

(54) **KLIMAANLAGE MIT INNEREM WÄRMEÜBERTRAGER**
AIR CONDITIONING UNIT WITH AN INNER HEAT TRANSFER UNIT
CLIMATISEUR AVEC ECHANGEUR THERMIQUE INTERIEUR

(30) Priorität: 20.09.1999 DE 19944950
(43) Veröffentlichungstag der Anmeldung: 03.07.2002
(73) Patentinhaber: Behr GmbH & Co. KG, 70469 Stuttgart (DE)
(72) Erfinder: DIENHART, Bernd, 50935 Köln (DE); KRAUSS, Hans-Joachim, 70567 Stuttgart (DE); MITTELSTRASS, Hagen, 71149 Bondorf (DE); STAFFA, Karl-Heinz, 70567 Stuttgart (DE); WALTER, Christoph, 70469 Stuttgart (DE); KALLFASS, Bernd, 71554 Weissach (DE)
(74) Vertreter: Grauel, Andreas, Dr.
(86) Internationale Anmeldenummer: PCT/EP2000/009126
(87) Internationale Veröffentlichungsnummer: WO 2001/022012

(56) Entgegenhaltungen:
- DE-A- 19 808 893
- DE-B- 1 208 314
- US-A- 2 885 868
- US-A- 3 012 414
- US-A- 3 283 524
- US-A- 4 417 453

## Beschreibung

Die Erfindung bezieht sich auf eine Klimaanlage mit einem Kältemittelkreislauf, der einen Verdampfer, einen das Kältemittel von einer Niederdruckseite zu einer Hochdruckseite fördernden Kompressor, einen niederdruckseitig zwischen dem Verdampfer und dem Kompressor angeordneten Sammler und einen inneren Wärmeübertrager umfaßt, der einen hochdruckseitigen Wärmeübertragerkanal und einen mit diesem in Wärmekontakt stehenden niederdruckseitigen Wärmeübertragerkanal aufweist.

Derartige Klimaanlagen sind insbesondere in Kraftfahrzeugen im Einsatz, z.B. in Form von CO₂-Klimaanlagen. Der innere Wärmeübertrager dient dazu, Wärme vom Kältemittel auf der Hochdruckseite auf das Kältemittel der Niederdruckseite zu übertragen, wodurch sich die sogenannte Leistungszahl, d.h. das Verhältnis aus Kälteleistung und Antriebsleistung der Klimaanlage deutlich steigern läßt.

Die US-A-3 012 414 offenbart eine Klimaanlage mit einem Sammler in dem lediglich Einkanal-Rohrleitungen einmünden.

Eine Klimaanlage dieser Art ist in der Offenlegungsschrift DE 196 35 454 A1 offenbart. Dort ist der innere Wärmeübertrager mit dem Sammler in eine Baueinheit integriert, indem er im Innern eines Sammlergehäuses untergebracht ist, beispielsweise in Form einer Flachrohrspirale mit voneinander beabstandeten Windungen.

Des weiteren ist es bekannt, als inneren Wärmeübertrager für eine Klimaanlage eine Koaxialrohrleitung mit zwei fluidgetrennten, miteinander in Wärmekontakt stehenden Rohrlängskanälen zu verwenden, um das hochdruckseitige Kältemittel vor einem Expansionsventil durch Wärmeübertragung auf das niederdruckseitige Kältemittel zu unterkühlen. In der Auslegeschrift DE 1 208 314 ist eine diesem Zweck dienende Koaxialrohrleitung beschrieben, bei der ein Innenrohr konzentrisch von einem Außenrohr umgeben und innenseitig mit einer die Wärmeübergangsfläche vergrößernden Längsberippung versehen ist. Zwischen Außenrohr und Innenrohr kann zur Verlängerung des wärmeübertragungswirksamen Strömungsweges eine Drahtschraube eingebracht sein. Als bekannt werden dort außerdem Innenrohrgestaltungen angegeben, bei denen das Innenrohr sternförmig gefaltet ist oder bei denen in das Innenrohr eine Blechwendel zur Erzeugung einer Drallströmung eingefügt ist.

Es ist auch eine Klimaanlage für ein Kraftfahrzeug bekannt, bei der ein innerer Wärmeübertrager mit einem Verdampfer und einem Expansionsventil zu einer integralen Baueinheit zusammengefaßt ist. Eine solche Kombination des inneren Wärmeübertragers an oder in den Verdampfer ist jedoch häufig mit einem relativ hohen Bauraumbedarf verbunden, was speziell bei den beengten Einbauverhältnissen von Kraftfahrzeugen zu Schwierigkeiten führen kann.

In der nicht vorveröffentlichten, älteren deutschen Patentanmeldung Nr. 199 03 833.3 ist eine integrierte Sammler-Wärmeübertrager-Baueinheit offenbart, bei welcher der innere Wärmeübertrager von einer gewendelten Koaxialrohrleitung gebildet ist, die im Sammlergehäuse aufgenommen ist.

Der Erfindung liegt als technisches Problem die Bereitstellung einer Klimaanlage der eingangs genannten Art mit einem inneren Wärmeübertrager zugrunde, der relativ einfach zu fertigen ist und bei gegebener Wärmeübertragungsleistung relativ wenig zusätzlichen Bauraum benötigt.

Die Erfindung löst dieses Problem durch die Bereitstellung einer Klimaanlage mit den Merkmalen des Anspruchs 1, 3 oder 4.

Bei der Klimaanlage nach Anspruch 1 beinhaltet der innere Wärmeübertrager speziell eine Koaxialrohrleitung, die wendelförmige Stege zwischen einem Außenrohr und einem Innenrohr aufweist und/oder die insgesamt wenigstens abschnittweise gewendelt ist. Die wendelförmigen Stege sind am Außenrohr und/oder am Innenrohr angeformt und daher herstellungstechnisch relativ einfach zu realisieren. Durch ihre Wendelform verlängern sie bei gegebener Baulänge der Koaxialrohrleitung den Strömungsweg für das zwischen Außenrohr und Innenrohr durchströmende Kältemittel, z.B. das niederdruckseitige Kältemittel, das mit dem durch das Innenrohr hindurchgeleitete Kältemittel, z.B. dem hochdruckseitigen Kältemittel, in Wärmekontakt steht. Zusätzlich oder alternativ zu dieser Maßnahme kann die Koaxialrohrleitung gewendelt ausgeführt sein, wodurch die benötigte Bauraumlänge deutlich kleiner als die wärmeübertragungswirksame Strömungsweglänge gehalten werden kann. Dabei bildet der niederdruckseitige Wärmeübertragerkanal einen Kältemittelkreislaufabschnitt zwischen Verdampfer und Sammler und/oder zwischen Sammler und Kompressor.

Bei einer nach Anspruch 2 weitergebildeten Klimaanlage ist in fertigungstechnisch vorteilhafter Weise die Koaxialrohrleitung von einem extrudierten Innenrohr mit Außenstegen, das in ein Außenrohr eingeschoben ist, oder von einem extrudierten Außenrohr mit Innenstegen, in welches das Innenrohr eingeschoben ist, oder von einem einstückig extrudierten Rohr mit integrierten Stegen zwischen Innen- und Außenrohr gebildet.

Bei der Klimaanlage nach Anspruch 3 erstreckt sich die Ausdehnung des von einer Mehrkanal-Rohrleitung gebildeten inneren Wärmeübertragers niederdruckseitig zu beiden Seiten des Sammlers, wozu der niederdruckseitige Rohrlängskanal einen in ein Gehäuse des Sammlers einmündenden und einen aus diesem ausmündenden Abschnitt aufweist, während der hochdruckseitige Rohrlängskanal als durchgehender Kanal das Sammlergehäuse durchquert oder mit einem ersten Abschnitt in einen innerhalb des Sammlergehäuses gebildeten Hochdruck-Durchführungsraum einmündet und mit einem zweiten Abschnitt aus diesem ausmündet. Je nach Gestaltung innerhalb des Sammlergehäuses ist dort der ein- und/oder ausmündende niederdruckseitige Rohrlängskanal in Wärmekontakt mit dem hochdruckseitigen Rohrlängskanal bzw. dem Hochdruck-Durchführungsraum, so daß sich folglich der innere Wärmeübertrager auch wenigstens teilweise innerhalb des Sammlergehäuses erstreckt.

Bei der Klimaanlage nach Anspruch 4 beinhaltet der innere Wärmeübertrager eine gewendelte Mehrkanal-Rohrleitung, die den Sammler umgibt. Mit anderen Worten ist der Sammler in diesem Fall in der Rohrwendel des inneren Wärmeübertragers untergebracht, was den Bauraumbedarf der Klimaanlage gering hält.

In einer Ausgestaltung dieser Klimaanlage ist gemäß Anspruch 5 die Sammleraußenseite mit einem Schraubenprofil entsprechend der umgebenden Mehrkanal-Rohrleitungswendel versehen, so daß diese formschlüssig an der Sammleraußenseite geführt anliegt.

Vorteilhafte Ausführungsformen der Erfindung sind in den Zeichnungen dargestellt und werden nachfolgend beschrieben. Hierbei zeigen:
- Fig. 1: ein Blockdiagramm einer Klimaanlage mit einem Kältemittelkreislauf mit innerem Wärmeübertrager in Form einer Mehrkanal-Rohrleitung,
- Fig. 2 bis 5: schematische Darstellungen möglicher Wendelfor-. men für die Mehrkanal-Rohrleitung der Klimaanlage von Fig. 1,
- Fig. 6 bis 10: Querschnitte verschiedener Realisierungen der Mehrkanal-Rohrleitung als Koaxialrohrleitung,
- Fig. 11: eine Längsschnittansicht eines Sammlerbereichs des Kältemittelkreislaufs von Fig. 1 mit durchgeführter Hochdruckleitung,
- Fig. 12: eine Längsschnittansicht entsprechend Fig. 11, jedoch für eine Variante mit Hochdruck-Durchführungsraum im Sammler,
- Fig. 13: eine Perspektivansicht eines Sammlers mit wendelförmig umgebender Koaxialrohrleitung eines inneren Wärmeübertragers für eine Klimaanlage nach.Art der Fig. 1 und
- Fig. 14: eine schematische Längsschnittansicht einer Variante der Kombination von Sammler und innerem Wärmeübertrager nach Fig. 13 mit schraubenförmigem Sammlerprofil.

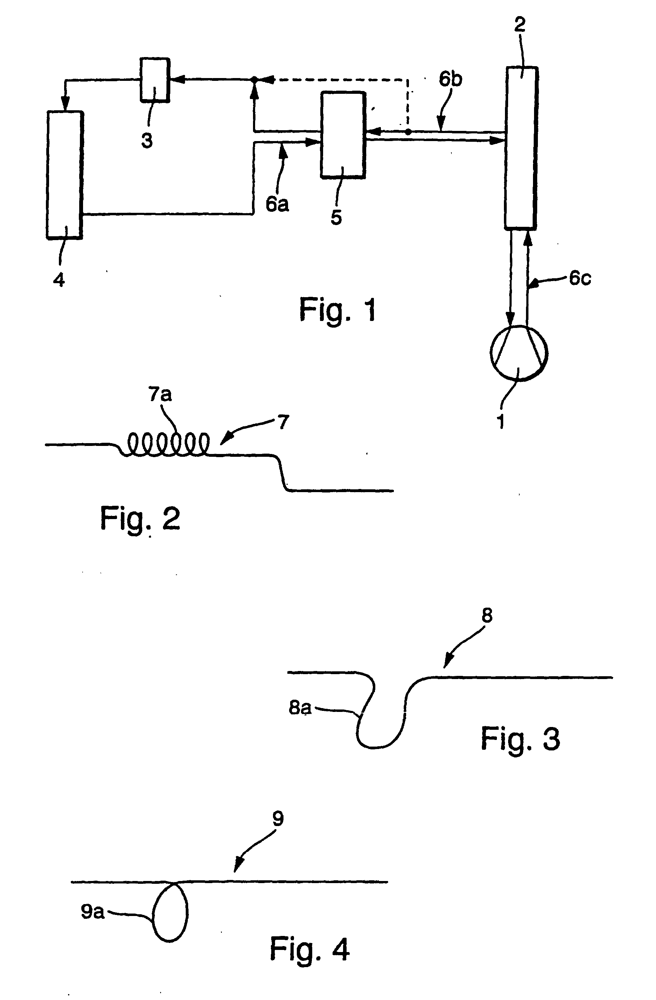

Fig. 1 zeigt schematisch als Blockdiagramm den Aufbau einer Klimaanlage, wie sie beispielsweise in einem Kraftfahrzeug einsetzbar ist. Im zugehörigen Kältemittelkreislauf befinden sich, wie üblich, ein Kompressor 1, ein daran hochdruckseitig anschließender Kondensator 2, der beispielsweis im Fall der Verwendung von CO₂ als Kältemittel allgemein besser als Gaskühler bezeichnet wird, ein diesem nachgeschaltetes Expansionsventil 3, ein daran in Kältemittelströmungsrichtung anschließender Verdampfer 4 und ein zwischen dem Verdampfer 4 und dem Kompressor 1 auf der Niederdruckseite angeordneter Sammler 5. Soweit die hochdruckseitige Kältemittelleitung und die niederdruckseitige Kältemittelleitung in Fig. 1 durch eng benachbarte Linien wiedergegeben sind, können je nach Anwendungsfall einer oder mehrere dieser Kreislaufabschnitte durch eine einen inneren Wärmeübertrager bildende Mehrkanal-Rohrleitung realisiert sein.

Der innere Wärmeübertrager beinhaltet folglich einen ersten Abschnitt 6a, der niederdruckseitig wenigstens einen Teil der Kältemittelleitung vom Verdampfer 4 zum Sammler 5 bildet, und/oder einen zweiten Abschnitt 6b, der niederdruckseitig wenigstens einen Teil der Kältemittelleitung vom Sammler 5 zum Kompressor 1 und hochdruckseitig wie der erste Abschnitt 6a wenigstens einen Teil der Kältemittelleitung vom Kondensator/Gaskühler 2 zum Expansionsventil 3 bildet, und/oder einen dritten Abschnitt 6c, der hochdruckseitig wenigstens einen Teil der Kältemittelleitung vom Kompressor 1 zum Kondensator/Gaskühler 2 und niederdruckseitig wie der zweite Abschnitt 6b wenigstens einen Teil der Kältemittelleitung vom Sammler 5 zum Kompressor 1 bildet. In einer gestrichelt angedeuteten Variante umgeht die hochdruckseitige Kältemittelleitung den Sammler 5 und führt ohne erneuten Wärmekontakt mit der Niederdruckseite zum Expansionsventil 3, d.h. in diesem Fall entfällt der erste Abschnitt 6a des inneren Wärmeübertragers. Analog kann auf einen anderen der drei inneren Wärmeübertragerabschnitte 6a, 6b, 6c oder auf zwei von ihnen verzichtet sein.

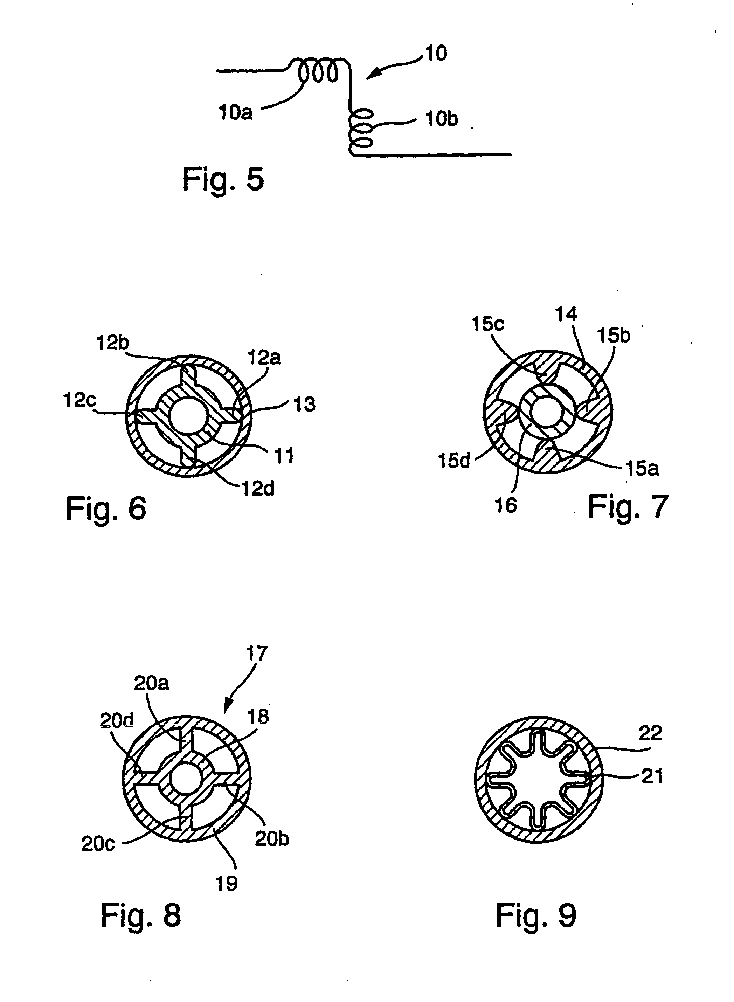

In den Fig. 2 bis 5 sind einige mögliche wendelförmige Realisierungen für die Mehrkanal-Rohrleitung skizziert, die zur Bildung der inneren Wärmeübertragerabschnitte 6a, 6b, 6c bauraumsparend verwendbar sind. Speziell zeigt Fig. 2 eine Mehrkanal-Rohrleitung 7, die in einem entsprechenden Abschnitt zu einer Wendel 7a mit geradliniger Wendellängsachse gewickelt ist. Fig. 3 zeigt eine Mehrkanal-Rohrleitung 8, die einen zu einem U-Bogen 8a gebogenen Abschnitt aufweist. Fig. 4 zeigt eine Mehrkanal-Rohrleitung 9 mit einem schlaufenfömig gewundenen Abschnitt 9a. Fig. 5 zeigt eine Mehrkanal-Rohrleitung 10 mit zwei Wendelabschnitten 10a, 10b mit zueinander senkrechten Wendellängsachsen.

Die Fig. 6 bis 10 zeigen Querschnittsansichten von verschiedenen Realisierungen der den inneren Wärmeübertrager bildenden Mehrkanal-Rohrleitung als Koaxialrohrleitung. Speziell veranschaulicht Fig. 6 einen inneren Wärmeübertrager in Form eines Koaxialrohres, das aus einem extrudierten Innenrohr 11 mit vier in äquidistantem Winkelabstand außenseitig angeformten, wendelförmig verlaufenden Längsstegen 12a, 12b, 12c, 12d besteht, das in ein zugehöriges Außenrohr 13 eingeschoben ist. Beim Ausführungsbeispiel von Fig. 7 besteht die Koaxialrohrleitung für den inneren Wärmeübertrager aus einem extrudierten Außenrohr 14, an dessen Innenseite vier in äquidistantem Winkelabstand angeordnete, wendelförmig verlaufende Längsstege 15a bis 15d angeformt sind und in das ein zugehöriges Innenrohr 16 eingeschoben ist. Fig. 8 zeigt ein als innerer Wärmeübertrager verwendbares Koaxialrohr 17, das als einstückiges Bauteil extrudiert gefertigt ist, wobei ein Innenrohrteil 18 und ein Außenrohrteil 19 über vier in äquidistantem Winkelabstand angeordnete, in Rohrlängsrichtung wendelförmig verlaufende Längsstege 20a bis 20d miteinander verbunden sind. In allen drei Beispielen der Fig. 6 bis 8 kann der wendelförmige Verlauf der Längsstege durch entsprechendes Tordieren um die Längsachse des Innenrohrs 11 im Fall von Fig. 6, des Außenrohrs 14 im Fall von Fig. 7 bzw. des gesamten Koaxialrohres 17 im Fall von Fig. 8 beim Extrusionsfertigungsvorgang bewirkt werden, wobei die Wendelsteigung in gewünschter Weise variabel eingestellt werden kann. Durch die Wahl der äquidistanten Winkelabstände der Stege ist der Ringraum zwischen Außen- und Innenrohrteil in Einzelkanäle gleichen Strömungsquerschnitts aufgeteilt.

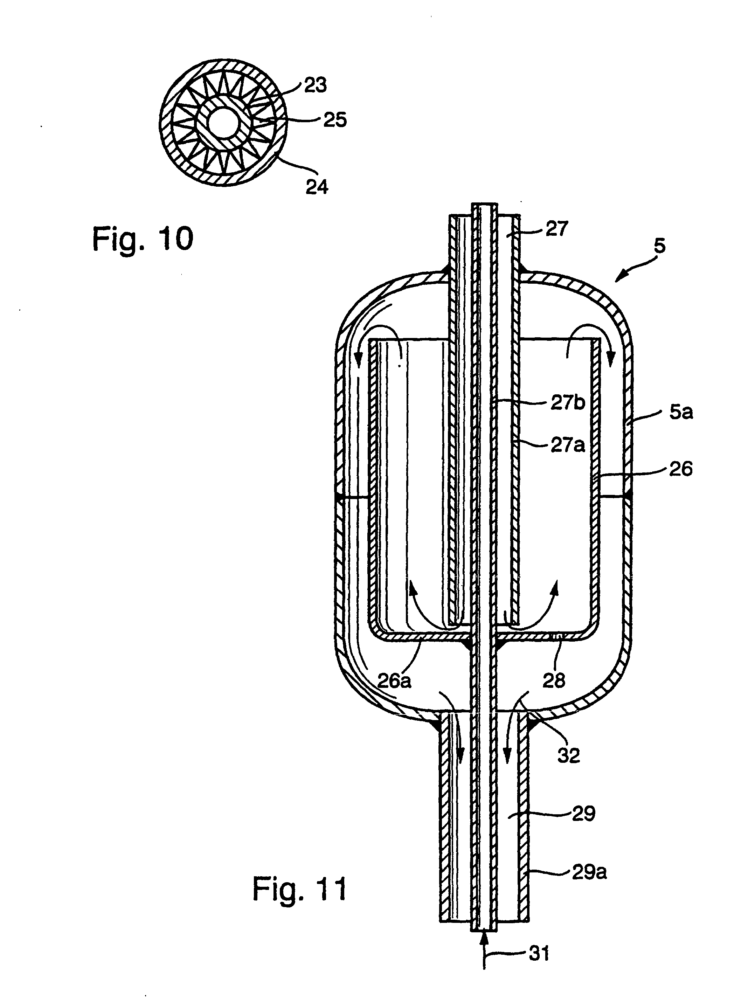

Fig. 9 zeigt eine Koaxialrohrgestaltung für den inneren Wärmeübertrager, bei der ein Innenrohr 21 mit gerundet sternförmigem Rohrwandquerschnitt in ein Außenrohr 22 eingeschoben ist. Im Ausführungsbeispiel von Fig. 10 besteht die Koaxialrohrleitung für den inneren Wärmeübertrager aus einem Innenrohr 23, einem Außenrohr 24 und einem zwischen das Innenrohr 23 und das Außenrohr 24 eingefügten Wellrippenprofil 25.

In allen Beispielen der Fig. 6 bis 10 beinhaltet die jeweilige Koaxialrohrleitung einen einteiligen, vom umschließenden Innenrohr gebildeten inneren Rohrlängskanal und einen mehrteiligen, vom Zwischenraum zwischen Innenrohr und Außenrohr gebildeten äußeren Rohrlängskanal, der durch die Stege bzw. das Innenrohrwandprofil oder das Wellrippenprofil in mehrere parallele Außenlängskanäle aufgeteilt ist. Ein wendelförmiger Verlauf der Trennelemente zwischen den einzelnen Außenlängskanälen verlängert den Strömungsweg für das dort hindurchgeleitete Kältemittel gegenüber der Rohrlänge und intensiviert dadurch den Wärmekontakt zwischen diesem Kältemittelstrom und dem durch das Innenrohr hindurchgeleiteten Kältemittelstrom. Zusätzlich kann, wie oben zu den Fig. 2 bis 5 erläutert, die Koaxialrohrleitung als Ganzes teilweise oder komplett gewendelt sein, um ihre Baulänge zu verkürzen und sie dadurch leichter in beengten Bauräumen einbringen zu können. Durch die Realisierung des inneren Wärmeübertragers als Mehrkanal-Rohrleitung braucht folglich nur ein einziges, mehrkanaliges Rohr gebogen werden, um sowohl für den hochdruckseitigen wie auch für den niederdruckseitigen Wärmeübertragerkanal des inneren Wärmeübertragers eine entsprechend gebogene, platzsparende Strömungsführung zu erzielen.

Es versteht sich, daß neben den in den Fig. 6 bis 10 gezeigten Ausführungsformen weitere Mehrkanalrohrgestaltungen möglich sind, z.B. solche, bei denen für das hochdruckseitige und das niederdruckseitige Kältemittel jeweils mehrere einzelne Rohrkanäle vorhanden sind, die zudem nicht unbedingt koaxial sein müssen, sondern beispielsweise auch alternierend nebeneinanderliegend angeordnet sein können. Statt der in Fig. 1 durch Pfeile angedeuteten Führung des hochdruckseitigen und niederdruckseitigen Kältemittels in den inneren Wärmeübertragerabschnitten 6a, 6b, 6c kann alternativ deren Führung im Gleichstrom für alle oder nur einen Teil der inneren Wärmeübertragerabschnitte 6a, 6b, 6c vorgesehen sein. Im Fall der Koaxialrohrleitung wird das hochdruckseitige Kältemittel vorzugsweise im Innenrohr geführt, während das niederdruckseitige Kältemittel im Ringraum zwischen Innen- und Außenrohr geführt wird, alternativ ist jedoch auch die Führung des hochdruckseitigen Kältemittels im äußeren Ringraum und die Führung des niederdruckseitigen Kältemittels im Innenrohr möglich.

Fig. 11 zeigt ein Ausführungsbeispiel, bei dem beidseits an den Sammler 5 je ein Abschnitt des inneren Wärmeübertragers in Koaxialrohrbauform anschließt und dabei ein den Sammler 5 nach außen abschließendes Sammlergehäuse 5a von einer hochdruckseitigen Leitung durchquert wird. Dazu befindet sich im Sammlergehäuse 5a ein Sammlertopf 26, in den eine von oben durch das Sammlergehäuse 5a durchgeführte, erste Koaxialrohrleitung 27 hineinführt und mit ihrem Außenrohr 27a in geringem Abstand über dem Topfboden 26a endet, in den eine oder mehrere Ölabsaugbohrungen 28 eingebracht sind. Das Innenrohr 27b der Koaxialrohrleitung 27 ist hingegen durch eine entsprechende Öffnung im Topfboden 26a fluiddicht weitergeführt und nach unten aus dem Sammlergehäuse 5a herausgeführt. Dort bildet es das Innenrohr einer zweiten Koaxialrohrleitung 29, deren Außenrohr fluiddicht in den Bodenbereich des Sammlergehäuses 5a unterhalb des Sammlertopfes 26 mündet.

Auf diese Weise bilden die erste Koaxialrohrleitung 27 den ersten inneren Wärmeübertragerabschnitt 6a und die zweite Koaxialrohrleitung 29 den zweiten inneren Wärmeübertragerabschnitt 6b von Fig. 1. Das vom Verdampfer kommende niederdruckseitige Kältemittel 32 gelangt über den äußeren Ringkanal der ersten Koaxialrohrleitung 27 in den Sammlertopf 26, von wo das gesammelte Kältemittel, wie mit den Pfeilen angedeutet, durch die Kompressorsaugwirkung in den Bereich zwischen Sammlertopf 26 und Sammlergehäuse 5a und von dort in den Sammlerbodenbereich und den äußeren Ringkanal der zweiten Koaxialrohrleitung 29 gesaugt wird, um in ihm direkt oder über den Kondensator/Gaskühler zum Kompressor zu gelangen. Das vom Kondensator/Gaskühler kommende, hochdruckseitige Kältemittel 31 durchquert mittig den Sammler 5 im unterbrechungsfrei hindurchgeführten Innenrohr 27b und steht dabei auch innerhalb des Sammlergehäuses 5a über den größten Teil der betreffenden Strömungslänge mit dem vom Verdampfer kommenden niederdruckseitigen Kältemittel in Wärmekontakt. Alternativ zur gezeigten Gegenstromführung ist eine Gleichstromführung von hochdruckseitigem Kältemittel 31 und niederdruckseitigem Kältemittel 32 möglich.

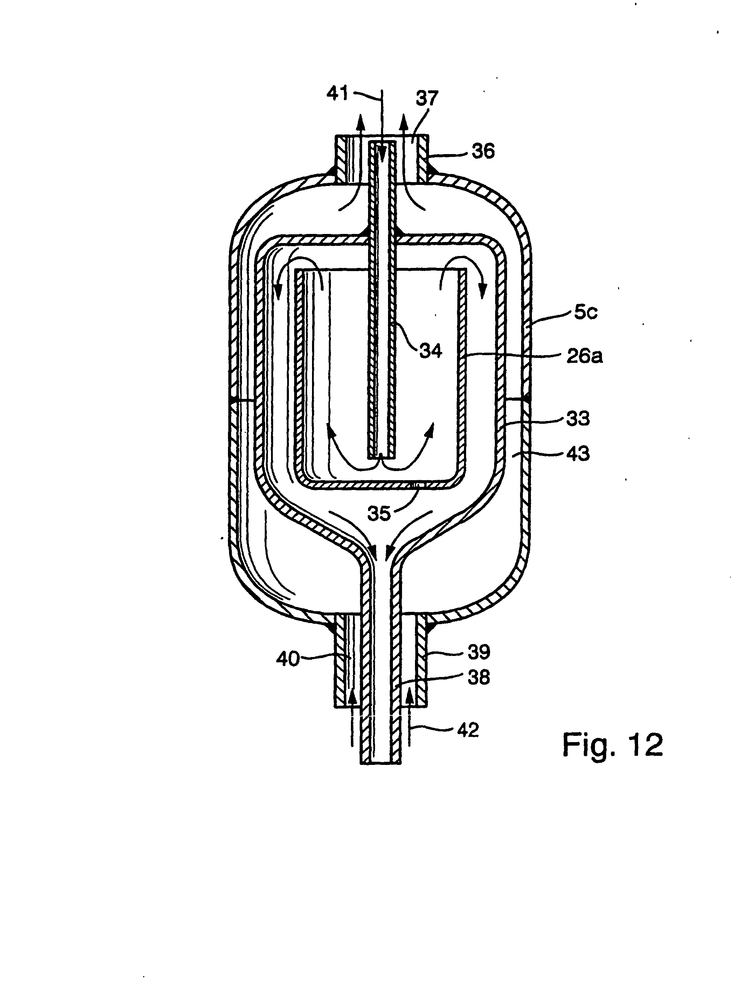

Fig. 12 zeigt eine Variante des Beispiels von Fig. 11, bei der zwischen einem außenseitigen Sammlergehäuse 5c und einem innenliegenden Sammlertopf 26a ein Zwischenmantel 33 eingebracht ist. Dieser schließt des Sammlertopf 26a nach oben hin mit Abstand fluiddicht ab, wobei ein Niederdruck-Innenrohr 34 fluiddicht diesen Deckelbereich des Zwischenmantels 33 durchquert und über dem Sammlertopfboden endet, in den wenigstens eine Ölabsaugbohrung 35 eingebracht ist. Das Niederdruck-Innenrohr 34 dient somit der Zuführung des vom Verdampfer kommenden niederdruckseitigen Kältemittels 41 in den Sammlertopf 26a. Von der Oberseite des Sammlergehäuses 5c nach außen wird es unter Bildung einer entspechenden Koaxialrohrleitung 37 von einem Außenrohr 36 umgeben, welches fluiddicht mit der Oberseite des Sammlergehäuses 5c verbunden ist und dort ausmündet. Nach unten verjüngt sich der Zwischenmantel 33 flaschenhalsförmig zu einem weiteren, austrittsseitigen Niederdruck-Innenrohr 38, das an der Unterseite des Sammlergehäuses 5c aus diesem austritt und dann von einem zugehörigen Außenrohr 39 unter Bildung einer weiteren Koaxialrohrleitung 40 umgeben wird, wobei dieses Außenrohr 39 seinerseits am Boden des Sammlergehäuses 5c fluiddicht festgelegt ist und dort einmündet.

In diesem Ausführungsbeispiel bildet folglich die erste Koaxialrohrleitung 37 wiederum den ersten inneren Wärmeübertragerabschnitt und die andere Koaxialrohrleitung 40 den zweiten inneren Wärmeübertragerabschnitt 6b von Fig. 1. Dabei strömt in diesem Fall das niederdruckseitige Kältemittel 41 vom Verdampfer kommend durch das Innenrohr 34 der zugehörigen Koaxialrohrleitung 37 in den Sammlertopf 26a und wird von dort über den Ringraum zwischen Sammlertopf 26a und Zwischenmantel 33 aus dem Sammlergehäuse 5c in das Innenrohr 38 der anderen Koaxialrohrleitung 40 abgesaugt, um von dort direkt oder über den Kondensator/Gaskühler zum Kompressor zu gelangen. Im Gegenstrom dazu gelangt das hochdruckseitige Kältemittel 42 über den Ringkanal der in Fig. 12 unteren Koaxialrohrleitung 40 in einen Hochdruck-Durchführungsraum 43, der im Sammler durch das Sammlergehäuse 5c als äußere und den Zwischenmantel 33 als innere Begrenzung gebildet ist. Nach Durchquerung des Hochdruck-Durchführungsraums 43 verläßt das hochdruckseitige Kältemittel 42 das Sammlergehäuse 5c nach oben über den Ringkanal der dort anschließenden Koaxialrohrleitung 37. Damit steht das hochdruckseitige Kältemittel über den Zwischenmantel 33 auch entlang seines Strömungsweges durch den Hochdruck-Durchführungsraum 43 des Sammlers mit dem niederdruckseitigen Kältemittel 41 in Wärmekontakt.

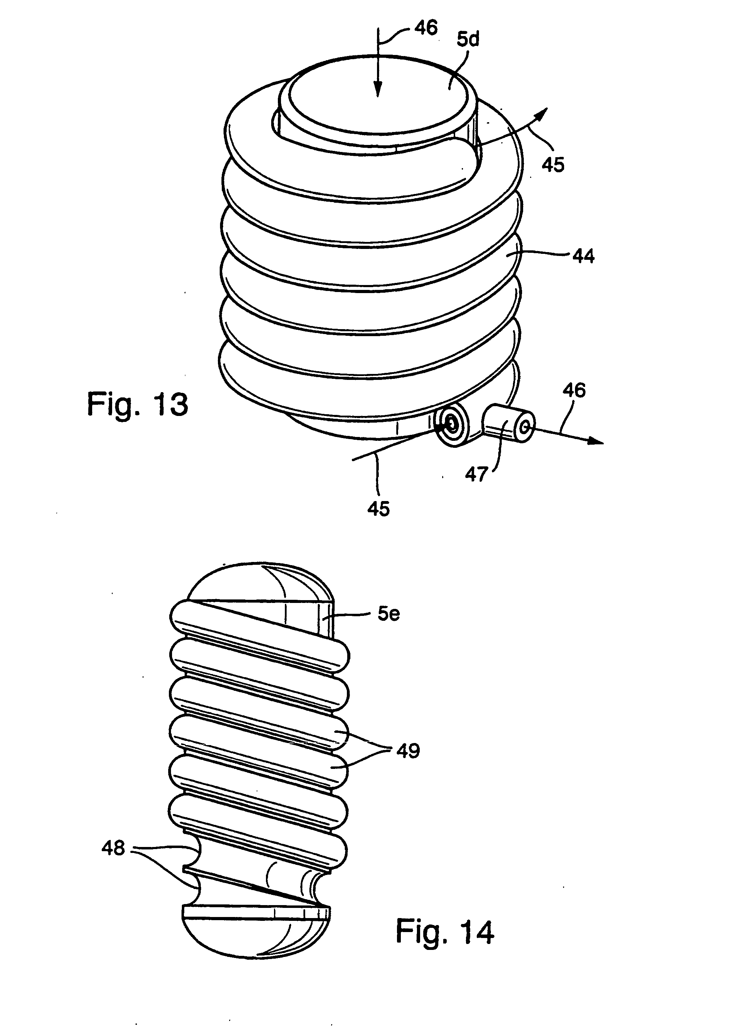

Fig. 13 zeigt ein Ausführungsbeispiel, bei dem als innerer Wärmeübertrager eine wendelförmig gewickelte Koaxialrohrleitung 44 dient. Im Innenraum der Koaxialrohrwendel 44 ist platzsparend ein Sammler 5b zylindrischer Bauform angeordnet. Hochdruckseitiges Kältemittel 45 wird am einen Stirnende der Koaxialrohrwendel 44 dessen innerem Rohrkanal zugeführt und verläßt diesen entsprechend am anderen Stirnende der Koaxialrohrwendel 44. Niederdruckseitiges Kältemittel 46 wird vom Verdampfer kommend dem Sammler 5d von oben zugeführt. Unter der Saugwirkung des Kompressors wird es von dort über einen in Fig. 13 nicht zu erkennenden, radialen Anschlußstutzen des oberen Endes der Koaxialrohrwendel 44 in deren äußeren Ringraum gesaugt. Dazu schafft dieser Anschlußstutzen eine Fluidverbindung zwischen dem oberen Sammlerbereich und dem äußeren Ringraum der Koaxialrohrwendel 44 in deren dortigem oberem Endbereich. Nach Durchquerung des äußeren Ringraums der Koaxialrohrwendel 44 verläßt das aus dem Sammler 5d abgesaugte Kältemittel den von der Koaxialrohrwendel 44 gebildeten inneren Wärmeübertragerabschnitt über einen weiteren radialen Anschlußstutzen 47, der am unteren Endbereich der Koaxialrohrwendel 44 in Fluidverbindung mit deren äußerem Ringraum ausgebildet ist. Stirnseitig ist der äußere Ringraum jeweils geschlossen. Die Koaxialrohrwendel 44 kann somit als der zweite innere Wärmeübertragerabschnitt 6b der Klimaanlage der Fig. 1 dienen.

Fig. 14 zeigt schematisch eine Variante des Ausführungsbeispiels von Fig. 13. Bei dieser Modifikation ist ein zylindrischer Sammler 5e an seiner Gehäuseaußenseite mit einer schraubenförmigen Profilierung 48 versehen, die als Führungsnut für eine konform eingelegte Koaxialrohrwendel 49 dient, die auf diese Weise geführt den Außenmantel des Sammlers 5e umgibt. Dabei ist der untere Teil der Koaxialrohrwendel 49 in Fig. 14 weggelassen, um die schraubenförmige Profilierung 48 des Sammlers 5e sichtbar werden zu lassen. Ansonsten entspricht dieses Ausführungsbeispiel in Aufbau und Funktion demjenigen von Fig. 13.

Die oben im Detail beschriebenen Realisierungen zeigen, daß durch die Erfindung eine Klimaanlage bereitgestellt wird, die einen wirkungsgradsteigernden inneren Wärmeübertrager aufweist und dabei relativ wenig Einbauplatz benötigt, indem der innere Wärmeübertrager von einer Mehrkanal-Rohrleitung gebildet ist, dessen niederdruckseitiger Wärmeübertragerkanal in Kältemittelströmungsrichtung vor und/oder hinter einem Sammler liegt und sich bei Bedarf auch in den Sammler erstrecken kann und/oder indem er von einer Koaxialrohrleitung gebildet ist, die insgesamt gewendelt ist und/oder gewendelte Stege bzw. Trennelemente zwischen Außen- und Innenrohrteil aufweist, so daß sich der Strömungsweg für die zwischen Außenund Innenrohrteil befindlichen Rohrkanäle gegenüber der Längsausdehnung des Koaxialrohrs verlängert. Die Erfindung ist insbesondere auf CO₂-Klimaanlagen von Kraftfahrzeug an-, wendbar. Da der Sammler einerseits und der innere Wärmeübertrager andererseits separate Komponenten der erfindungsgemäßen Klimaanlage bilden, können beide unabhängig voneinander an das jeweils vorliegende Fahrzeug angepaßt werden. Der Sammler kann durch das Vorhandensein des inneren Wärmeübertragers vergleichsweise kleinvolumig ausgeführt werden. Dadurch läßt sich das sogenannte Bar-Liter-Produkt reduzieren, wodurch die Stabilität des Sammlerbehälters bei hohen Drücken verbessert wird.

## Patentansprüche

1. Klimaanlage, insbesondere für ein Kraftfahrzeug, mit
- einem Kältemittelkreislauf mit einem das Kältemittel von einer Niederdruckseite zu einer Hochdruckseite fördernden Kompressor (1), einem Verdampfer (4), einem niederdruckseitig zwischen dem Verdampfer und dem Kompressor angeordneten Sammler (5) und einem inneren Wärmeübertrager mit einem hochdruckseitigen Wärmeübertragerkanal und einem mit diesem in Wärmekontakt stehenden niederdruckseitigen Wärmeübertragerkanal,
**dadurch gekennzeichnet, daß**
- der innere Wärmeübertrager eine Koaxialrohrleitung mit einem Außenrohr (13) und einem Innenrohr (11) beinhaltet, die an der Innenseite des Außenrohres und/oder an der Außenseite des Innenrohres angeformte, wendelförmige Stege (12a bis 12d) zwischen Außenrohr und Innenrohr aufweist und/oder die wenigstens abschnittweise als Koaxialrohrwendel (44) ausgebildet ist, wobei der eine Wärmeübertragerkanal vom Innenraum des Innenrohres und der andere Wärmeübertragerkanal vom Ringraum zwischen Außenröhr und Innenrohr gebildet ist, und
- der niederdruckseitige Wärmeübertragerkanal einen niederdruckseitigen Kältemittelkreislaufabschnitt zwischen Verdampfer (4) und Sammler (5) und/oder zwischen Sammler und Kompressor (1) bildet.

2. Klimaanlage nach Anspruch 1, weiter **dadurch gekennzeichnet, daß** die Koaxialrohrleitung von einem Außenrohr (13) und einem darin eingeschobenen, extrudierten Innenrohr (11) mit Außenstegen (12a, 12d) oder von einem extrudierten Außenrohr (14) mit Innenstegen (15a bis 15d) mit eingeschobenem Innenrohr (16) oder von einem einstückig extrudierten Koaxialrohr (17) mit Stegen (20a bis 20d) zwischen Innenrohrteil (18) und Außenrohrteil (19) gebildet ist.

3. Klimaanlage, mit
- einem Kältemittelkreislauf mit einem das Kältemittel von einer Niederdruckseite zu einer Hochdruckseite fördernden Kompressor (1), einem Verdampfer (4), einem niederdruckseitig zwischen dem Verdampfer und dem Kompressor angeordneten Sammler (5) und einem inneren Wärmeübertrager mit einem hochdruckseitigen Wärmeübertragerkanal und einem mit diesem in Wärmekontakt stehenden, niederdruckseitigen Wärmeübertragerkanal,
**dadurch gekennzeichnet, daß**
- der innere Wärmeübertrager eine Mehrkanal-Rohrleitung (27, 29) beinhaltet, von welcher ein niederdruckseitiger Rohrlängskanal einen in ein Sammlergehäuse (5a) einmündenden ersten Abschnitt (27a) und einen aus diesem ausmündenden zweiten Abschnitt (29a) aufweist und ein hochdruckseitiger Rohrlängskanal (27b; 36, 39) durchgehend das Sammlergehäuse durchquert oder mit einem ersten Abschnitt (39) in einen innerhalb des Sammlergehäuses (5c) gebildeten Hochdruck-Durchführungsraum (43) einmündet und mit einem zweiten Abschnitt (36) aus diesem ausmündet.

4. Klimaanlage,
mit
- einem Kältemittelkreislauf mit einem das Kältemittel von einer Niederdruckseite zu einer Hochdruckseite fördernden Kompressor (1), einem Verdampfer (4), einem niederdruckseitig zwischen dem Verdampfer und dem Kompressor angeordneten Sammler (5) und einem inneren Wärmeübertrager mit einem hochdruckseitigen Wärmeübertragerkanal und einem mit diesem in Wärmekontakt stehenden niederdruckseitigen Wärmeübertragerkanal,
**dadurch gekennzeichnet, daß**
- der innere Wärmeübertrager eine Mehrkanal-Rohrleitung (44, 49) beinhaltet, die den Sammler (5d, 5e) außenseitig wendelförmig umgibt.

## Claims

1. Air conditioning unit, in particular for a motor vehicle, with
- a coolant circuit having a compressor (1) which conveys the coolant from a low-pressure side to a high-pressure side, an evaporator (4), a collector (5) arranged on the low-pressure side between the evaporator and the compressor, and an internal heat exchanger with a heat exchanger channel on the high-pressure side and a heat exchanger channel on the low-pressure side which is in thermal contact therewith,
**characterised in that**
- the internal heat exchanger comprises a coaxial tube with an outer tube (13) and an inner tube (11), which comprises, on the inside of the outer tube and/or on the outside of the inner tube, helically formed webs (12a to 12d) between the outer tube and the inner tube and/or is formed at least in sections as a coaxial spiralled tube (44), such that one heat exchanger channel is formed by the inside space of the inner tube and the other heat exchanger channel is formed by the annular space between the outer and inner tubes, and
- the heat exchanger channel on the low-pressure side forms a low-pressure coolant circuit section between the evaporator (4) and the collector (5) and/or between the collector and the compressor (1).

2. Air conditioning unit according to Claim 1, further
**characterised in that**
the coaxial tube is formed of an outer tube (13) and an extruded inner tube (11) with external webs (12a, 12d) pushed into it, or of an extruded outer tube (14) with internal webs (15a to 15d) with an inner tube (16) pushed into it, or of a coaxial tube (17) extruded as one piece with webs (20a to 20d) between the inner tube portion (18) and the outer tube portion (19).

3. Air conditioning unit, with
- a coolant circuit having a compressor (1) which conveys the coolant from a low-pressure side to a high-pressure side, an evaporator (4), a collector (5) arranged on the low-pressure side between the evaporator and the compressor, and an internal heat exchanger with a heat exchanger channel on the high-pressure side and a heat exchanger channel on the low-pressure side which is in thermal contact therewith,
**characterised in that**
- the internal heat exchanger comprises a multi-channel tube (27, 29), one tube channel of which on the low-pressure side has a first section (27a) which opens into a collector housing (5a) and a second section (29a) leading out of the latter, and another tube channel (27b; 36, 39) of which on the high-pressure side passes through the collector housing or, in a first section (39), opens into a high-pressure passage space (43) inside the collector housing (5c), while a second section (36) thereof leads away from the said housing.

4. Air conditioning unit, with
- a coolant circuit having a compressor (1) which conveys the coolant from a low-pressure side to a high-pressure side, an evaporator (4), a collector (5) arranged on the low-pressure side between the evaporator and the compressor, and an internal heat exchanger with a heat exchanger channel on the high-pressure side and a heat exchanger channel on the low-pressure side which is in thermal contact therewith,
**characterised in that**
- the internal heat exchanger comprises a multi-channel tube (44, 49) which surrounds the collector (5d, 5e) on the outside thereof in a spiral.

## Revendications

1. Dispositif de climatisation, en particulier pour un véhicule automobile, comprenant
- un circuit de réfrigérant comportant un compresseur (1) acheminant le réfrigérant à partir d'un côté basse pression vers un côté haute pression, un évaporateur (4), un collecteur (5) disposé côté basse pression entre l'évaporateur et le compresseur et un échangeur thermique intérieur doté d'un canal d'échangeur thermique côté haute pression et d'un canal d'échangeur thermique côté basse pression en contact thermique avec le premier, **caractérisé en ce que**
- l'échangeur thermique intérieur contient une canalisation coaxiale dotée d'un tube extérieur (13) et d'un tube intérieur (11), qui présente au niveau du côté intérieur du tube extérieur et/ou au niveau du côté extérieur du tube intérieur des traverses en forme de spirale (12a à 12d) entre le tube extérieur et le tube intérieur, et/ou qui est configurée au moins par sections en tant que spirale de tube coaxial (44), le premier canal d'échangeur thermique étant formé par l'espace intérieur du tube intérieur et le deuxième canal d'échangeur thermique étant formé par l'espace annulaire présent entre le tube extérieur et le tube intérieur, et
- le canal d'échangeur thermique côté basse pression forme une section de circuit de réfrigérant côté basse pression entre l'évaporateur (4) et le collecteur (5) et/ou entre le collecteur et le compresseur (1).

2. Dispositif de climatisation selon la revendication 1, **caractérisé en ce que** la canalisation coaxiale est formée par un tube extérieur (13) et par un tube intérieur (11) extrudé introduit dans celui-ci, doté de traverses extérieures (12a, 12d), ou par un tube extérieur (16) extrudé doté de traverses intérieures (15a à 15d), comportant un tube intérieur (16) introduit dans celui-ci, ou encore par un tube coaxial (17) extrudé d'une seule pièce comportant des traverses (20a à 20d) entre la partie de tube intérieure (18) et la partie de tube extérieure (19).

3. Dispositif de climatisation, comprenant
- un circuit de réfrigérant comportant un compresseur (1) acheminant le réfrigérant à partir d'un côté basse pression vers un côté haute pression, un évaporateur (4), un collecteur (5) disposé côté basse pression entre l'évaporateur et le compresseur et un échangeur thermique intérieur doté d'un canal d'échangeur thermique côté haute pression et d'un canal d'échangeur thermique côté basse pression en contact thermique avec le premier, **caractérisé en ce que**
- l'échangeur thermique intérieur contient une canalisation à plusieurs canaux (27, 29), parmi lesquels un canal longitudinal tubulaire côté basse pression présente une première section (27a) débouchant dans un boîtier de collecteur (5a) et une deuxième section (29a) sortant de celui-ci et un canal longitudinal tubulaire (27b ; 36, 39) côté haute pression traverse de part en part le boîtier du colleteur ou débouche avec une première section (39) dans un espace de passage haute pression (43) formé à l'intérieur du boîtier du collecteur (5c) et sort de celui-ci avec une deuxième section (36).

4. Dispositif de climatisation, comprenant
- un circuit de réfrigérant comportant un compresseur (1) acheminant le réfrigérant à partir d'un côté basse pression vers un côté haute pression, un évaporateur (4), un collecteur (5) disposé côté basse pression entre l'évaporateur et le compresseur et un échangeur thermique intérieur doté d'un canal d'échangeur thermique côté haute pression et d'un canal d'échangeur thermique côté basse pression en contact thermique avec le premier, **caractérisé en ce que**
- l'échangeur thermique intérieur contient une canalisation à plusieurs canaux (44, 49), qui entoure en forme de spirale le collecteur (5d, 5e) sur son côté extérieur.
